# DEMANDE DE BREVET EUROPEEN

(11) **EP 1 842 600 A1**
(43) Date de publication de la demande: **10.10.2007**
(21) Numéro de dépôt: 07356035.1
(22) Date de dépôt: 23.03.2007
(51) Int. Cl.: B05C 11/10, B29B 13/02, B67D 5/62

(54) **Procédé et installation de dépotage d'une résine thermodurissable**

(30) Priorité: 27.03.2006 FR 0602639
(71) Demandeur: SKF Aerospace France, 26240 Saint-Vallier-sur-Rhone (FR)
(72) Inventeur: Jacquemin-Verguet, Alain, 39570 Macornay (FR); Petit, Christophe, 71330 Simard (FR); Giboudot, Jean-Charles, 39210 Voiteur (FR); Marlin, Denis, 39210 Domblans (FR)
(74) Mandataire: Myon, Gérard Jean-Pierre

(57) **Abrégé**

Ce procédé d'extraction d'une résine thermodurcissable (4) hors de son fût (3) de stockage comprend une étape dans laquelle on fait s'écouler la résine par gravité vers l'extérieur du fût à travers un orifice (35) dirigé vers le bas, en chauffant la résine au moins au voisinage de l'orifice jusqu'à une température de chauffe sensiblement inférieure à la température de réticulation de la résine et en maintenant (en 53) la résine qui s'écoule à la température de chauffe.

## Description

La présente invention a trait à un procédé d'extraction d'une résine thermodurcissable hors de son fût de stockage. L'invention a également trait à une installation d'extraction d'une résine thermodurcissable hors de son fût de stockage comprenant un dispositif de chauffe de la résine.

Les industries aéronautiques et automobiles utilisent des pièces en matériaux composites fabriquées selon un procédé dit de « moulage par transfert de résine » (RTM), consistant à injecter une résine thermodurcissable dans un moule à l'intérieur duquel un renfort fibreux a été préalablement positionné. La résine thermodurcissable utilisée dans ce procédé est classiquement stockée et transportée dans un fût de stockage et doit être extraite hors de ce fût pour son injection dans le moule. Or, il est courant qu'une résine thermodurcissable se présente à température ambiante sous la forme d'une pâte à viscosité élevée. Dans ces conditions, il est nécessaire de chauffer la résine pour diminuer sa viscosité et permettre ainsi son extraction hors du fût et son écoulement dans le moule. Ce chauffage doit être réalisé à une température strictement inférieure à la température de réticulation de la résine afin d'éviter la polymérisation du système thermodurcissable, qui est une réaction fortement exothermique.

Il est connu d'extraire une résine thermodurcissable hors de son fût de stockage en utilisant un piston chauffant apte à coulisser dans le fût contenant la résine. Dans ce système, le piston chauffe la résine à une température inférieure à sa température de réticulation, tout en exerçant sur la résine un effort de pression. Ainsi, il se forme au voisinage de la surface du piston un film de résine chauffée de viscosité sensiblement réduite qui, sous l'effet de la pression exercée par le piston, passe par un orifice du piston et s'écoule vers l'extérieur du fût. Dans ce système, l'extraction de la résine hors du fût est réalisée de manière saccadée, avec un débit relativement faible, puisqu'il est nécessaire de chauffer la résine couche par couche pour permettre son passage dans l'orifice du piston. De plus, il existe un risque d'usure et d'attaque chimique des joints assurant l'étanchéité entre le piston et les parois latérales du fût. Une telle dégradation des joints d'étanchéité peut générer des fuites de résine au niveau des bords du piston. La résine est alors susceptible de durcir et d'immobiliser le système, le nettoyage de l'installation étant long et difficile.

C'est à ces inconvénients qu'entend plus particulièrement remédier l'invention, en proposant un procédé et une installation d'extraction d'une résine thermodurcissable hors de son fût permettant un écoulement en continu de la résine vers l'extérieur du fût, le risque d'immobilisation de l'installation due à des fuites de résine étant limité.

A cet effet, l'invention a pour objet un procédé d'extraction d'une résine thermodurcissable hors de son fût de stockage, caractérisé en ce qu'on fait s'écouler la résine par gravité vers l'extérieur du fût à travers un orifice dirigé vers le bas, en chauffant la résine au moins au voisinage de l'orifice jusqu'à une température de chauffe sensiblement inférieure à la température de réticulation de la résine et en maintenant la résine qui s'écoule à la température de chauffe.

Selon d'autres caractéristiques avantageuses de l'invention :
- on chauffe la résine au moyen d'un dispositif de chauffe régulé à la température de chauffe, disposé à l'extérieur et en dessous du fût, l'orifice étant en regard d'un canal chauffé ménagé dans le dispositif de chauffe ;
- on fait s'écouler la résine par gravité dans le canal, la résine étant répartie par gravité à la surface d'au moins un déflecteur de chauffe et s'écoulant à travers au moins une encoche du déflecteur ;
- on munit l'orifice d'un piquage apte à conduire la chaleur et comprenant un obturateur de l'orifice ;
- on recueille la résine qui s'écoule à l'extrémité inférieure du canal dans au moins un récipient maintenu à la température de chauffe.

L'invention a également pour objet une installation d'extraction d'une résine thermodurcissable hors de son fût de stockage comprenant un dispositif de chauffe de la résine, ce dispositif de chauffe étant disposé à l'extérieur et en dessous du fût et pourvu d'un canal chauffé destiné à recevoir l'écoulement par gravité de la résine depuis un orifice du fût, le canal comportant au moins un déflecteur de chauffe disposé transversalement dans le canal.

Selon d'autres caractéristiques avantageuses de cette installation :
- le déflecteur a une face de forme sensiblement parabolique orientée vers l'orifice et comporte des encoches périphériques destinées à l'écoulement de la résine ;
- l'orifice est percé dans une paroi du fût apte à être rapportée de manière réversible sur le fût ;
- l'orifice est muni d'un piquage apte à conduire la chaleur et comprenant un obturateur de l'orifice, le dispositif de chauffe comportant des moyens de commande de l'ouverture du clapet ;
- l'installation comprend un manipulateur de préhension du fût apte à faire pivoter le fût pour amener l'orifice vers le bas.

Les caractéristiques et avantages de l'invention apparaîtront dans la description qui va suivre d'un mode de réalisation d'une installation et d'un procédé selon l'invention, donnée uniquement à titre d'exemple et faite en se référant aux dessins annexés, dans lesquels:
- la figure 1 est une vue schématique en perspective d'une installation conforme à l'invention ;
- la figure 2 est une coupe à plus grande échelle selon le plan II de la figure 1 ;
- la figure 3 est une vue à plus grande échelle du détail III de la figure 2 ;
- la figure 4 est une vue de dessus à plus grande échelle d'un déflecteur utilisé dans la partie de l'installation représentée à la figure 2.

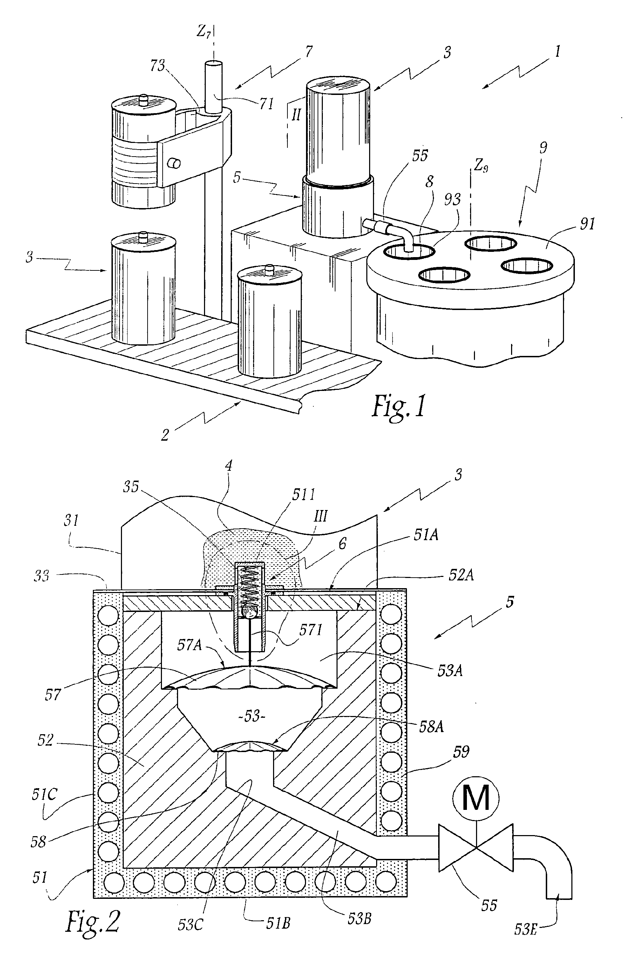

L'installation 1 représentée à la figure 1 est destinée à l'extraction d'une résine thermodurcissable 4 hors de son fût 3 de stockage.

A titre d'exemple, la résine thermodurcissable 4 peut être une résine époxy monocomposant se présentant à température ambiante sous la forme d'une pâte à viscosité élevée dont la viscosité diminue par chauffage, une température de chauffe avantageuse étant de l'ordre de 80°C. A cette température de chauffe, qui est sensiblement inférieure à la température de réticulation de la résine, la résine 4 est suffisamment fluide pour permettre son extraction et son écoulement par gravité hors du fût 3.

L'installation 1 comprend un convoyeur 2 prévu pour amener des fûts 3 contenant la résine 4 jusqu'à un manipulateur 7 de préhension des fûts 3. Chaque fût 3 disposé sur le convoyeur 2 a été préalablement préparé en vue de l'extraction de la résine 4. Plus précisément, chaque fût 3 comporte un orifice 35 percé dans une paroi 33 du fût 3. Dans le mode de réalisation décrit, l'orifice 35 est ménagé dans le couvercle 33 du fût 3 et les fûts 3 sont disposés sur le convoyeur 2 avec leur couvercle 33 dirigé vers le haut. Selon une variante non représentée de l'invention, l'orifice 35 peut être ménagé dans une pièce n'appartenant pas au fût 3 et destinée à être rapportée sur le corps 31 du fût 3 en remplacement du couvercle 33. Selon une autre variante, l'orifice 35 peut être présent à l'origine sur le fût 3 du fournisseur.

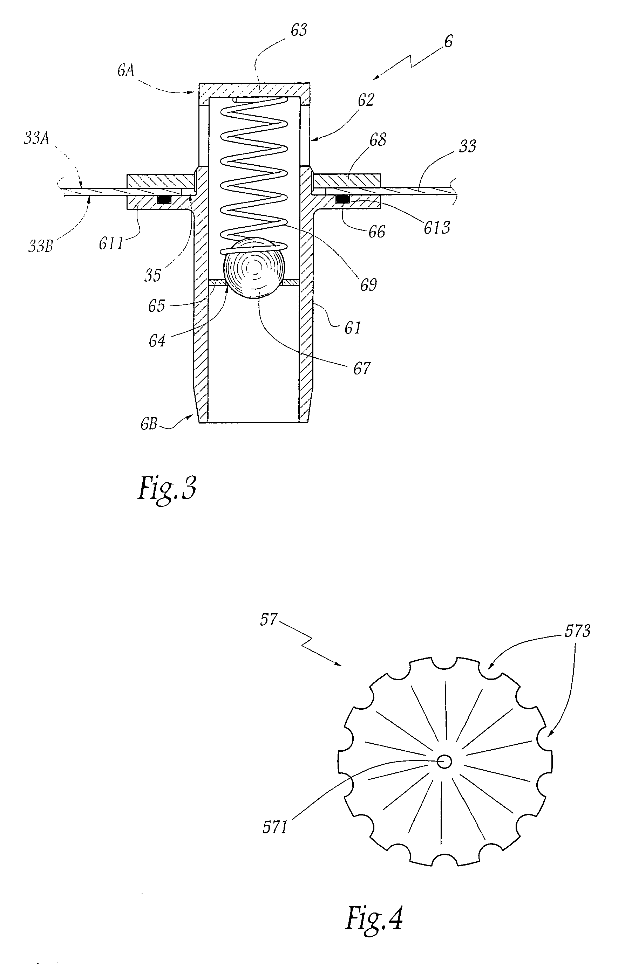

L'orifice 35 de chaque fût 3 est muni d'un piquage 6 de forme globalement tubulaire, qui traverse l'orifice 35 comme visible à la figure 3. Une première extrémité 6A du piquage 6 fait saillie vers l'intérieur du fût 3 lorsque le couvercle 33 est en place sur le fût 3 et comporte une paroi transversale d'extrémité 63. Une deuxième extrémité 6B du piquage 6 est ouverte et débouche vers l'extérieur du fût 3 lorsque le couvercle 33 est en place sur le fût 3. La paroi latérale 61 du piquage 6 comporte, au voisinage de l'extrémité 6A, quatre lumières 62 débouchant vers l'intérieur du fût 3.

Le piquage 6 comporte en outre une collerette périphérique externe 611 apte à venir en appui, au voisinage de l'orifice 35, contre la face 33B du couvercle 33 destinée à être orientée vers l'extérieur du fût 3. Le piquage 6 est fixé sur le couvercle 33 au moyen d'un écrou 68 qui enserre le piquage 6 du côté de la face 33A du couvercle 33 destinée à être orientée vers l'intérieur du fût 3. L'écrou 68 est apte à maintenir la collerette 611 en appui contre la face 33B du couvercle 33. Un joint torique 66 est prévu dans une rainure annulaire 613 de la collerette 611 pour assurer l'étanchéité de la fixation du piquage 6 sur le couvercle 33.

Le piquage 6 comporte une collerette interne 65 délimitant une ouverture 64 à l'intérieur du piquage 6 tubulaire. Une bille 67, disposée à l'intérieur du piquage 6 entre la collerette 65 et l'extrémité 6A du piquage 6, forme un obturateur de l'ouverture 64. La bille 67 est maintenue dans sa position d'obturation de l'ouverture 64 par un ressort de compression 69 intercalé entre l'extrémité 6A du piquage 6 et la bille 67.

Les parois 61 et 63 du piquage 6 sont constituées en un matériau thermiquement conducteur, par exemple de nature métallique, et sont aptes à conduire la chaleur entre l'extérieur et l'intérieur du fût 3.

Le manipulateur 7 de préhension des fûts 3 a pour fonction de saisir un fût 3 muni d'un piquage 6 se trouvant à l'extrémité aval du convoyeur 2, et de déplacer ce fût 3 pour le positionner en regard d'un dispositif de chauffe 5, avec son couvercle 33 dirigé vers le bas. A cet effet, le manipulateur 7 comporte un corps 71 d'axe longitudinal Z₇ sensiblement vertical, sur lequel est monté un bras 73 de préhension des fûts 3. Le bras 73 est apte à coulisser parallèlement à l'axe Z₇ et à pivoter autour de l'axe Z₇. Le bras 73 est également apte à faire pivoter le fût 3 qu'il porte autour d'un axe perpendiculaire à l'axe Z₇, de manière à retourner le fût 3 et à diriger son couvercle 33 vers le bas.

Le dispositif de chauffe 5 de l'installation 1 comporte un corps 51 globalement cylindrique, dont le fond 51B et la paroi latérale 51C sont bordés d'une ceinture chauffante 59. Un bloc de chauffe 52 est disposé dans le corps 51 et délimite un canal interne 53 du dispositif 5. Le bloc de chauffe 52 est constitué en aluminium et est apte à être chauffé et régulé par la ceinture chauffante 59 à une température de chauffe de l'ordre de 80°C.

Le canal 53 comporte deux portions principales 53A et 53B. Une portion supérieure 53A du canal 53 s'étend sensiblement verticalement depuis une paroi supérieure 52A du bloc de chauffe 52 vers une partie centrale du bloc de chauffe, alors qu'une portion inférieure 53B du canal 53 s'étend selon une direction oblique depuis la partie centrale du bloc de chauffe vers le fond 51B du corps 51. La portion inférieure 53B traverse une paroi latérale 51C du corps 51 au voisinage du fond 51B pour déboucher à l'extérieur du dispositif 5. Ainsi, le canal 53 est à même de permettre un écoulement par gravité de la résine 4 successivement dans les portions 53A et 53B, la résine 4 étant chauffée dans le canal 53 et dirigée par gravité vers une extrémité 53E du canal 53 située à l'extérieur du corps 51.

La portion inférieure 53B du canal 53 est pourvue d'une vanne de fermeture 55 motorisée, disposée à l'extérieur du corps 51 au voisinage de l'extrémité 53E du canal 53. La vanne 55 est apte à empêcher sélectivement l'écoulement de la résine 4 hors du canal 53.

La portion supérieure 53A du canal 53 comporte deux déflecteurs de chauffe 57 et 58 superposés. Ces déflecteurs sont constitués en aluminium et chauffés à la température de chauffe de l'ordre de 80°C par contact avec le bloc de chauffe 52. Chaque déflecteur 57 ou 58 est disposé transversalement dans le canal 53 et destiné à augmenter la surface de chauffe de la résine 4 dans le canal 53.

Les déflecteurs 57 et 58 ont des profils identiques, une vue de dessus du déflecteur supérieur 57 étant montrée à la figure 4. Chaque déflecteur 57 ou 58 a une section transversale globalement circulaire, le diamètre du déflecteur inférieur 58 étant inférieur au diamètre du déflecteur supérieur 57. Les parois supérieures 57A et 58A des déflecteurs 57 et 58 sont de forme globalement parabolique et convexe, de manière à augmenter la surface spécifique de contact entre la résine 4 et les déflecteurs de chauffe.

Comme visible à la figure 4, chaque déflecteur 57 ou 58 comporte des encoches périphériques, portant la référence 573 à la figure 4, destinées à l'écoulement par gravité de la résine 4 depuis la paroi supérieure 57A ou 58A du déflecteur vers la partie du canal 53 située au-dessous du déflecteur. La présence de ces encoches à la périphérie des déflecteurs 57 et 58 permet de guider l'écoulement de la résine 4 le long des parois latérales 53C du canal 53, c'est-à-dire au contact du bloc de chauffe 52, ce qui améliore le chauffage de la résine 4. La portion 53A du canal 53 a une section globalement tronconique entre les déflecteurs 57 et 58, ce qui permet de forcer l'écoulement par gravité de la résine 4 entre les deux déflecteurs.

Le déflecteur 57 comporte un doigt de commande 571 qui s'étend depuis sa paroi 57A en direction de la paroi supérieure 52A du bloc de chauffe 52. Le doigt 571 est aligné avec un logement 511 ménagé dans le corps 51 et destiné au passage du piquage 6. Lorsque le piquage 6 est introduit dans le logemement 511, le doigt 571 est apte à libérer l'ouverture 64 du piquage 6 en déplaçant la bille 67 à l'encontre du ressort 69.

L'installation 1 conforme à l'invention comprend en outre un carrousel 9 de récupération de la résine 4 s'écoulant au niveau de l'extrémité 53E du canal 53. Le carrousel 9 comporte un bloc chauffant 91 régulé à la température de chauffe de l'ordre de 80°C et pourvu de logements 93 destinés à accueillir des pots ou « gamelles » 8 de réception de la résine 4. Le carrousel 9 est apte à pivoter autour d'un axe Z₉ sensiblement vertical de manière à amener successivement les pots 8 au-dessous de l'extrémité 53E du canal 53. Les pots 8 sont constitués en un matériau thermiquement conducteur de façon à maintenir la résine 4 qui s'écoule hors du canal 53 à la température de chauffe, par contact avec le bloc 91.

L'installation 1 comprend un dispositif non représenté de détection du niveau de remplissage des pots 8, associé à une alarme d'alerte en cas de dépassement des consignes du dispositif de détection. L'installation 1 comprend également un dispositif d'arrêt d'urgence, également non représenté.

Un procédé d'extraction de la résine 4 hors de son fût 3 de stockage comprend des étapes dans lesquelles :

Tout d'abord, on perce un orifice 35 dans le couvercle 33 du fût 3 et on équipe l'orifice 35 d'un piquage 6 tel que décrit précédemment. En variante, le piquage 6 peut équiper une pièce n'appartenant pas au fût 3 et apte à être rapportée sur le corps 31 du fût 3 en remplacement de son couvercle. Dans ce cas, une première étape du procédé consiste à enlever le couvercle du fût 3 et à fixer la pièce équipée du piquage 6 sur le corps 31, à la place du couvercle. Selon une autre variante, lorsque le fût 3 est déjà pourvu d'un orifice, une première étape du procédé consiste à munir cet orifice du piquage 6 en veillant à assurer l'étanchéité de la fixation du piquage 6 dans l'orifice préexistant.

On place le fût 3 ainsi préparé sur le convoyeur 2 d'amenée des fûts 3, le couvercle 33 étant dirigé vers le haut. Lorsque le convoyeur 2 a positionné le fût 3 à l'aplomb du bras 73 du manipulateur 7, celui-ci saisit le fût 3 et le déplace vers le haut, parallèlement à l'axe longitudinal Z₇ du corps 71. Le bras 73 pivote alors autour de l'axe Z₇ pour amener le fût 3 au-dessus du dispositif de chauffe 5. Le fût 3 est ensuite retourné de manière à diriger le couvercle 33 et le piquage 6 vers le bas.

Le bras 73 du manipulateur 7 déplace le fût 3 vers le bas parallèlement à l'axe Z₇, jusqu'à ce que le piquage 6 soit introduit dans le logement 511 du dispositif 5. L'introduction du piquage 6 dans le logement 511 assure le centrage du fût 3 par rapport à la paroi supérieure 51A du corps 51.

Lorsque le piquage 6 est introduit dans le logement 511, le doigt 571 du déflecteur 57 déplace la bille 67 du piquage 6 à l'encontre de l'effort élastique exercé par le ressort 69 et libère ainsi l'ouverture 64. La résine 4 est alors apte à s'écouler par gravité à travers les lumières 62 et l'ouverture 64 du piquage 6, vers le canal 53 du dispositif 5.

La résine 4 située à l'intérieur du fût 3 est chauffée par l'intermédiaire des parois latérale 61 et transversale 63 du piquage 6, qui conduisent la chaleur depuis le canal 53 vers l'intérieur du fût 3. La viscosité de la résine 4 au voisinage du piquage 6 a ainsi tendance à diminuer, ce qui facilite l'écoulement par gravité de la résine 4 à travers le piquage 6.

Le chauffage de la résine 4 se poursuit lors de l'écoulement par gravité de la résine 4 dans le canal 53 chauffé. La résine 4 se répartit par gravité sur les parois supérieures 57A et 58A globalement paraboliques des déflecteurs de chauffe 57 et 58 et s'écoule à travers les encoches périphériques de ces déflecteurs. La vanne 55 étant ouverte, on récupère la résine 4 chauffée dans un pot 8 de réception situé à l'aplomb de l'extrémité 53E du canal 53.

Lorsque la limite de remplissage du pot 8 est atteinte et détectée par le dispositif de détection, le carrousel 9 pivote autour de l'axe Z₉ de manière à amener un nouveau pot 8 vide à l'aplomb de l'extrémité 53E du canal 53. La vanne 55 est momentanément fermée lors du pivotement du carrousel 9.

Ce procédé d'extraction de résine permet ainsi un écoulement en continu de la résine 4 hors de son fût 3 de stockage, la résine s'écoulant par gravité et étant chauffée en continu dans le canal 53. Le débit de l'écoulement de la résine 4 peut atteindre des valeurs relativement importantes en fonction de la section du piquage 6 et de la surface spécifique de contact de la zone de chauffe. Cette surface spécifique peut en particulier être améliorée en augmentant les dimensions des déflecteurs 57 et 58. Ainsi, en adaptant la section du piquage 6, la dimension des déflecteurs 57 et 58 et la puissance de chauffe du dispositif 5, il est possible de garantir un débit et une température donnés de l'écoulement de la résine 4. Ce débit et cette température peuvent être choisis en fonction du volume de résine consommée et de sa température d'utilisation.

Un autre avantage de ce procédé et de cette installation d'extraction de résine est de permettre l'extraction de la résine 4 hors de son fût 3 de stockage quels que soient la forme et le diamètre de ce fût. De plus, le risque de fuite de la résine 4 et de blocage des mécanismes est limité. En cas de débordement, les pièces constitutives de l'installation 1 sont démontables et facilement nettoyables, de façon à réduire le temps d'immobilisation de l'installation.

## Revendications

1. Procédé d'extraction d'une résine thermodurcissable (4) hors de son fût (3) de stockage, **caractérisé en ce qu'**on fait s'écouler la résine par gravité vers l'extérieur du fût à travers un orifice (35) dirigé vers le bas, en chauffant la résine au moins au voisinage de l'orifice jusqu'à une température de chauffe sensiblement inférieure à la température de réticulation de la résine et en maintenant (en 53) la résine qui s'écoule à la température de chauffe.

2. Procédé selon la revendication 1, **caractérisé en ce qu'**on chauffe la résine (4) au moyen d'un dispositif de chauffe (5) régulé à la température de chauffe, disposé à l'extérieur et en dessous du fût (3), l'orifice (35) étant en regard d'un canal (53) chauffé ménagé dans le dispositif de chauffe.

3. Procédé selon la revendication 2, **caractérisé en ce qu'**on fait s'écouler la résine (4) par gravité dans le canal (53), la résine étant répartie par gravité à la surface d'au moins un déflecteur (57, 58) de chauffe et s'écoulant à travers au moins une encoche (573) du déflecteur.

4. Procédé selon l'une quelconque des revendications précédentes, **caractérisé en ce qu'**on munit l'orifice (35) d'un piquage (6) apte à conduire la chaleur et comprenant un obturateur (67) de l'orifice.

5. Procédé selon l'une quelconque des revendications précédentes, **caractérisé en ce qu'**on recueille la résine (4) qui s'écoule à l'extrémité inférieure (53E) du canal (53) dans au moins un récipient (8) maintenu à la température de chauffe.

6. Installation d'extraction d'une résine thermodurcissable (4) hors de son fût (3) de stockage, comprenant un dispositif de chauffe (5) de la résine, **caractérisée en ce que** le dispositif de chauffe est disposé à l'extérieur et en dessous du fût et est pourvu d'un canal (53) chauffé destiné à recevoir l'écoulement par gravité de la résine depuis un orifice (35) du fût, le canal comportant au moins un déflecteur (57, 58) de chauffe disposé transversalement dans le canal.

7. Installation selon la revendication 6, **caractérisée en ce que** le déflecteur (57, 58) a une face (57A, 58A) de forme sensiblement parabolique orientée vers l'orifice (35) et comporte des encoches (573) périphériques destinées à l'écoulement de la résine (4).

8. Installation selon l'une des revendications 6 ou 7, **caractérisée en ce que** l'orifice (35) est percé dans une paroi (33) du fût (3) apte à être rapportée de manière réversible sur le fût.

9. Installation selon l'une quelconque des revendications 6 à 8, **caractérisée en ce que** l'orifice (35) est muni d'un piquage (6) apte à conduire la chaleur et comprenant un obturateur (67) de l'orifice, le dispositif de chauffe (5) comportant des moyens (571) de commande de l'obturateur 67.

10. Installation selon l'une quelconque des revendications 6 à 9, **caractérisée en ce qu'**elle comprend un manipulateur (7) de préhension du fût (3) apte à faire pivoter le fût pour amener l'orifice (35) vers le bas.
